# EUROPÄISCHE PATENTSCHRIFT

(11) **EP 2 954 811 B1**
(45) Veröffentlichungstag und Bekanntmachung des Hinweises auf die Patenterteilung: **21.03.2018**
(21) Anmeldenummer: 15171593.5
(22) Anmeldetag: 11.06.2015
(51) Int. Cl.: A47J 31/00, A47J 31/40, A47J 31/44, A47J 31/46

(54) **DURCHFLUSSMESSUNG IN EINEM HEISSGETRÄNKEAUTOMATEN, INSBESONDERE EINEM KAFFEEVOLLAUTOMATEN**
FLOW MEASUREMENT IN A HOT DRINKS MACHINE, IN PARTICULAR A COFFEE MACHINE
MESURE DE DEBIT DANS UN AUTOMATE DE BOISSONS CHAUDES, EN PARTICULIER UNE MACHINE A CAFE TOTALEMENT AUTOMATIQUE

(30) Priorität: 12.06.2014 DE 102014108281
(43) Veröffentlichungstag der Anmeldung: 16.12.2015
(73) Patentinhaber: Melitta Professional Coffee Solutions GmbH & Co. KG, 32429 Minden (DE)
(72) Erfinder: BUCHHOLZ, Bernd, 32369 Rahden (DE); OSTERMEIER, Jörg, 31655 Stadthagen (DE)
(74) Vertreter: Specht, Peter

(56) Entgegenhaltungen:
- DE-A1-102009 016 506
- DE-U1-202008 016 400
- US-A1- 2012 240 784

## Beschreibung

Die Erfindung betrifft einen Heißgetränkeautomaten, insbesondere einen Kaffeevollautomaten, nach dem Oberbegriff des Anspruchs 1. Dieser weist eine Versorgung für Wasser z. B. aus einem Vorratstank oder durch Anschluss an das Wasserversorgungsnetz auf, die eine Zubereitungsleitung und eine Nebenleitung mit dem Wasser speist.

Ein Heißgetränkeautomat, insbesondere ein Kaffeevollautomat, nach dem Oberbegriff des Anspruchs 1 ist aus der DE 10 2009 016 506 A bekannt.

Zur Herstellung eines Heißgetränkes wird heißes Wasser durch einen Getränkerohstoff geführt. Dabei nimmt das Wasser Bestandteile des Getränkerohstoffs auf und den Geschmack des Getränkerohstoffs an. So hergestellte Heißgetränke sind beispielsweise Kaffeegetränke, Tee oder Instantgetränke wie Kakao.

Um verschiedene Heißgetränke herzustellen, werden dem Heißgetränk häufig Getränkezusätze wie beispielsweise Milch oder Milchschaum beigefügt, und/oder die Menge des Wassers, die Menge oder Sorte des Getränkerohstoffs und/oder die Zubereitungstemperatur variiert. Dafür muss die Menge des Wassers bekannt sein und/oder gesteuert werden. Heißgetränkeautomaten nutzen herkömmlich einen Durchflusssensor, der die Menge des Wassers misst. In einer bekannten Ausführungsform ist der Durchflusssensor in einer Zubereitungsleitung angeordnet, in der auch die Brüheinheit angeordnet ist.

Allerdings wird Wasser in Heißgetränkeautomaten nicht nur für die Herstellung des Kaffees genutzt, sondern zudem für weitere Funktionseinheiten des Heißgetränkeautomaten. So müssen beispielsweise die Leitungen für die Getränkezusätze regelmäßig gereinigt werden, damit sich dort keine Verunreinigungen bzw. Rückstände wie z. B. Fett- oder Biofilme bilden. Weiterhin weisen Heißgetränkeautomaten häufig einen Dampferzeuger auf, mit dem Wasserdampf, beispielsweise zur Herstellung von heißem Milchschaum, erzeugt werden kann. Auch kann Wasser dem Heißgetränk nach seiner Zubereitung zugeführt werden, um die Temperatur des Heißgetränkes zu verändern, beispielsweise um einen kalten Kaffee oder Teewasser mit unterschiedlichen Temperaturen herzustellen. Auch für diese Funktionen ist es häufig erforderlich oder vorteilhaft, dass die Menge des dafür genutzten Wassers bekannt ist.

Daher sind auch Heißgetränkeautomaten bekannt, bei denen der Durchflusssensor in einer Zuleitung des Heißgetränkeautomaten angeordnet ist, die sowohl die Zubereitungseinheit als auch die weiteren Funktionseinheiten mit dem Wasser speist. Jedoch kann bei zeitnaher oder zeitgleicher Entnahme von Wasser für diese Einheiten die für die Zubereitung des Heißgetränkes entnommene Menge des Wassers durch die für die Funktionseinheiten entnommene Menge verfälscht werden, oder umgekehrt.

Aufgabe der Erfindung ist es, einen Heißgetränkeautomaten, insbesondere einen Kaffeevollautomaten, zu schaffen, mit dem einerseits jeweils die Menge des in der Zubereitungseinheit und in den Funktionseinheiten genutzten Wassers erfasst wird, bei der die für die Zubereitungseinheit erfasste Menge Wasser aber nicht durch die für die weiteren Funktionseinheiten genutzte Menge Wasser beeinflusst ist, und die andererseits kostengünstig ist.

Diese Aufgabe löst die Erfindung durch den Gegenstand des Anspruchs 1. Vorteilhafte Ausgestaltungen sind den abhängigen Ansprüchen zu entnehmen.

Geschaffen wird nach Anspruch 1 ein Heißgetränkeautomat zur Zubereitung eines Heißgetränkes, insbesondere Kaffee, Tee oder Kakao, mit einem Leitungssystem, das von Wasser durchflossen ist, wobei das Leitungssystem eine Zubereitungsleitung umfasst, die über wenigstens eine Zuleitung mit dem Wasser gespeist wird, wobei in der Zubereitungsleitung ein erster Durchflusssensor zur Erfassung der Menge des in der Zubereitungsleitung fließenden Wassers, sowie eine Zubereitungseinheit, insbesondere eine Brühkammer, für die Zubereitung des Heißgetränkes angeordnet sind, wobei der Heißgetränkeautomat wenigstens eine weitere Funktionseinheit umfasst, die über die wenigstens eine Zuleitung mit dem Wasser gespeist wird, und wobei der Heißgetränkeautomat zumindest einen zweiten Durchflusssensor zur Erfassung der Menge des für die weitere Funktionseinheit genutzten Wassers umfasst. Dabei weist der Heißgetränkeautomat nach Anspruch 1 mehrere der Funktionseinheiten auf, die über die Zuleitung mit dem Wasser gespeist werden. Diese sind weiter nach Anspruch 1 an eine gemeinsame Nebenleitung angeschlossen, die über die Zuleitung mit dem Wasser gespeist wird, und in der der zweite Durchflusssensor angeordnet ist.

Es wird derart ein Heißgetränkeautomat geschaffen, der zur Zubereitung eines Heißgetränkes, insbesondere eines Kaffeegetränkes, Tee oder Kakao, ausgebildet ist. In der Zubereitungsleitung ist die Zubereitungseinheit, z. B. eine Brühkammer, für die Zubereitung des Heißgetränkes, insbesondere des Kaffeegetränkes, angeordnet.

Es werden die für die Zubereitungseinheit und die für die weitere Funktionseinheit genutzte Menge Wasser jeweils getrennt voneinander erfasst. Dadurch ist eine genaue Erfassung der jeweils genutzten Menge möglich, ohne dass sich die erfassten Mengen gegenseitig beeinflussen.

Bevorzugt sind die mehreren Funktionseinheiten zueinander parallel angeordnet.

Es ist bevorzugt, dass zumindest eine der über die Nebenleitung mit dem Wasser gespeisten Funktionseinheiten aus der Gruppe ist:
- Reinigungskreislauf für die Reinigung der Zubereitungseinheit und/oder einer Getränkeleitung, und/oder Reinigungskreislauf für die Reinigung einer Getränkezusatz- Leitung,
- Dampferzeuger,
- Kaltwasserzufuhr,
- Milchsystem oder
- Dichtungssystem

Durch die getrennte Auswertungsmöglichkeit der Kalt- und Heiß-Wasserverbräuche ist eine volumengenaue und zeitoptimale Prozesssteuerung möglich. Beispielhaft eingesetzt z. B. bei
- Prozessparalleler Speisung des Dampfers
- Prozessparalleles Spülen und Kühlen des Milchsystems
- Prozessparallele Zugaben von Kaltwasser.
- Verschachtelung von Prozessen mit Kalt- und Heißwasserbestandteilen (z. B. bei der Reinigung)

Es ist daher bevorzugt, dass der Heißgetränkeautomat eine Gerätesteuerung aufweist, die dazu ausgelegt ist, die Funktionseinheiten in Abhängigkeit von einem ersten mit dem ersten Durchflusssensor erfassten Messwert und einem zweitem mit dem zweiten Durchflusssensor erfassten Messwert zu steuern. Dabei wird bevorzugt jeweils eine Einschaltzeit und/oder eine Ausschaltzeit der Funktionseinheiten gesteuert. Durch die Steuerung der Einschaltzeit und/oder der Ausschaltzeit der Kaltwasserzufuhr ist beispielsweise die Herstellung eines Temperatur eingestellten Heißgetränkes möglich. Durch die Steuerung der Einschaltzeit und/oder der Ausschaltzeit eines Reinigungszyklusses ist beispielsweise die Intensität der Reinigung beispielsweise in Abhängigkeit der Häufigkeit einer Getränkeherstellung und/oder einer Betriebsdauer des Heißgetränkeautomaten möglich.

Um die Kosten für die Durchflusssensoren gering zu halten, ist es bevorzugt, dass der erste Durchflusssensor und/oder der zweite Durchflusssensor als Flügelradsensor ausgebildet sind. Es sind aber auch andere Durchflusssensoren wie beispielsweise Ultraschallsensoren oder magnetisch arbeitende Sensoren bevorzugt.

Es ist mehreren der Funktionseinheiten jeweils der zweite Durchflusssensor zugeordnet. Dabei sind die mehreren Funktionsleitungen an die gemeinsame Nebenleitung angeschlossen, in der der zweite Durchflusssensor für die mehreren Funktionseinheiten angeordnet ist. Sofern einige der Funktionseinheiten des Heißgetränkeautomaten nicht gleichzeitig genutzt werden, kann mit dieser Ausführungsform die Anzahl der zweiten Durchflusssensoren verringert werden, ohne die Genauigkeit der Steuerung zu verändern.

Es ist weiter besonders bevorzugt, dass allen Funktionseinheiten ein gemeinsamer zweiter Durchflusssensor zugeordnet ist. In dieser Ausführungsform weist der Heißgetränkeautomat eine Nebenleitung auf, in der der eine zweite Durchflusssensor angeordnet ist. Die Funktionseinheiten sind dabei alle an die eine Nebenleitung angeschlossen. Der Vorteil dieser Ausführungsform besteht darin, dass nur ein einziger zweiter Durchflusssensor benötigt wird. Einerseits ist die Menge des in der Zubereitungseinheit genutzten Wassers mit dem ersten Durchflusssensor unter Berücksichtigung des mit dem zweiten Durchflusssensor gemessenen Wertes sehr genau bestimmbar. Zudem werden die weiteren Funktionseinheiten nicht gleichzeitig genutzt und/oder die von ihnen benötigte Menge Wasser ist sehr gut abschätzbar. Daher ermöglicht auch diese Anordnung eine sehr genaue Steuerung der Zubereitungseinheit sowie der Funktionseinheiten.

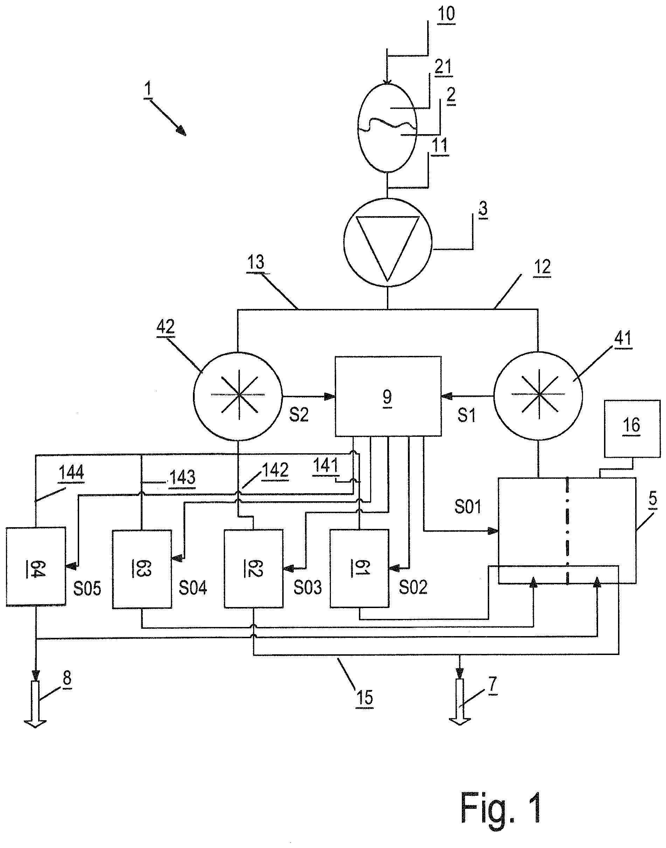

Die Aufgabe wird weiterhin gelöst mit einem Verfahren zur Herstellung eines Heißgetränkes mit einem solchen Heißgetränkeautomaten, bei dem die Einschaltzeiten und/oder Ausschaltzeiten der Zubereitungseinheit und/oder der Funktionseinheiten des Heißgetränkeautomaten in Abhängigkeit von dem ersten, mit dem ersten Durchflusssensor gemessenen Messwert und dem zweiten, mit dem zweiten Durchflusssensor gemessenen Messwert gesteuert werden. Im Folgenden ist die Erfindung anhand von einer Figur beschrieben. Die Figur ist lediglich beispielhaft und schränkt den allgemeinen Erfindungsgedanken nicht ein. Es zeigt
- Fig. 1: ein vereinfacht schematisch dargestelltes Wasserleitungssystem eines Heißgetränkeautomaten.

Das in der Fig. 1 dargestellte Wasserleitungssystem 1 veranschaulicht die Wassernutzung in einem Kaffeevollautomaten. Die Erfindung ist aber nicht auf Kaffeevollautomaten beschränkt, sondern auch auf andere Heißgetränkeautomaten anwendbar, mit denen alternativ oder zusätzlich andere Heißgetränke wie beispielsweise Tee oder Kakao herstellbar sind. Im Folgenden werden die Begriffe Heißgetränkeautomat und Kaffeevollautomat, sowie Heißgetränk und Kaffeegetränk synonym verwendet.

Bei dem Kalfeevollautomaten der Fig. 1 wird Wasser 2 einem Wasservorratsbehälter 21, beispielsweise über einen Zufluss 10, zugeführt und dort bevorratet. Alternativ kann der Kaffeeautomat natürlich auch direkt an das Wasserversorgungsnetz angeschlossen sein (nicht dargestellt). Zur Herstellung eines Kaffeegetränkes (nicht dargestellt) wird es mit Hilfe einer Pumpe 3 durch eine Zuleitung 11 in eine Zubereitungsleitung 12 gepumpt. Die Menge des in der Zubereitungsleitung 12 fließenden Wassers 2 wird mit einem ersten Durchflusssensor 41 gemessen. Es wird dann einer Zubereitungseinheit, hier einer Zubereitungseinheit 5, zugeführt, in der z. B. das Kaffeegetränk aufgebrüht wird. Nach dem Aufbrühen wird es durch eine Getränkeleitung 15 zu einem Getränkeauslass 7 geleitet und dort in einen Behälter (nicht dargestellt) wie beispielsweise eine Tasse ausgelassen.

Das im Wasservorratsbehälter 21 bevorratete Wasser 2 wird zudem für weitere Funktionen des Kaffeevollautomaten genutzt. Dafür weist der Heißgetränkeautomat verschiedene Funktionseinheiten 61 - 64 auf.

Beispielsweise ist für die Reinigung der Zubereitungseinheit und der Getränkeleitung 15 und/oder für die Reinigung von Getränkezusatz- Leitungen (nicht dargestellt) wie beispielsweise Milchleitungen ein Reinigungskreislauf 61 vorgesehen. Im Reinigungskreislauf 61 kann dem Wasser 2 ein Reinigungsmittel (nicht dargestellt) zugesetzt werden. Das zur Reinigung genutzte Wasser wird aus dem Getränkeauslass 7 oder durch entsprechende Umschaltungselemente in den Abfluss ausgelassen.

Zusätzlich kann der Heißgetränkeautomat eine Kaltwasserzufuhr 62 aufweisen, mit der dem Heißgetränk kaltes Wasser 2, beispielsweise zur Herstellung von Temperatur eingestellten Heissgetränken, z. B. kaltem Kaffee oder Teewasser, zugeführt wird. Dafür wird das kalte Wasser 2, insbesondere gemeinsam mit dem Heißgetränk, aus dem Getränkeauslass 7 ausgelassen.

Zusätzlich oder alternativ weist der Heißgetränkeautomat einen Dampferzeuger 64 auf, in dem das Wasser 2 verdampft wird. Der Dampf wird hier über einen separaten Dampfauslass 8 aus dem Heißgetränkeautomaten ausgelassen und beispielsweise zum manuellen Aufschäumen von Milch genutzt. Weiterhin wird der Dampf auch für eine Erhitzung von Milch und/oder Milchschaum für automatisch zubereitete Milch/Milchmischgetränke genutzt (Zubereitungseinheit 5), die dann über den Getränkeauslauf 7 ausgegeben werden.

Außerdem weist der Heißgetränkeautomat gegebenenfalls weitere Funktionseinheiten 63 auf, für die Wasser 2 benötigt wird, beispielsweise zum Aufpumpen von Dichtungen.

Das für die Funktionseinheiten 61 - 64 jeweils benötigte Wasser 2 wird diesen über Funktionsleitungen 141 - 144 zugeführt, die hier von einer gemeinsamen Nebenleitung 13 aus gespeist werden. Dafür wird das Wasser 2 mit Hilfe der Pumpe 3 durch die Zuleitung 12 in die Nebenleitung 13 gepumpt. Die Menge des in der Nebenleitung 13 fließenden Wassers 2 wird mit einem zweiten Durchflusssensor 423 gemessen, der in der Nebenleitung 13 angeordnet ist. Das Wasser 2 wird dann in die Funktionsleitungen 141 - 144 gepumpt.

Die hier gezeigte Ausführungsform des Heißgetränkeautomaten nutzt daher nur einen einzigen zweiten Durchflusssensor 42 für alle weiteren Funktionseinheiten 61 - 64. Der zweite Durchflusssensor 42 wird hier vor allem dafür genutzt, die Kaltwasserzufuhr 62 zur Herstellung von Temperatur eingestellten Heißgetränken wie z. B. kalten Kaffee oder Teewasser zu steuern und/oder eine Prozessunterstützung des Milchsystems durch z. B. Spülen zu ermöglichen.

Dafür weist der Heißgetränkeautomat eine Gerätesteuerung 9 auf, die die Einschaltzeiten und/oder die Ausschaltzeiten der Zubereitungseinheit 5 und/oder der Funktionseinheiten 61 - 64 mithilfe von Steuersignalen S01 - S0i und in Abhängigkeit von den mit den Durchflusssensoren 41, 42 gemessenen Messwerten S1, S2 steuert.

### Bezugszeichenliste

- 1: Wasserleitungssystem
- 10: Zufluss
- 11: Zuleitung
- 12: Zubereitungsleitung
- 13: Nebenleitung
- 141 - 142: Funktionsleitung
- 15: Getränkeleitung
- 2: Wasser
- 3: Pumpe
- 41: Erster Durchflussmesser
- 42: Zweiter Durchflussmesser
- 5: Zubereitungseinheit
- 61 - 64: Funktionseinheiten
- 61: Reinigungskreislauf für Getränkeleitungen / Getränkezusatzleitungen
- 62: Kaltwasserzufuhr
- 63: Weitere Funktionen
- 64: Dampferzeuger
- 7: Getränkeauslass oder Abfluss
- 8: Dampfauslass
- 9: Gerätesteuerung
- S1: Erstes Messsignal
- S2: Zweites Messsignal
- S01 - S0i: Steuersignal
- 16: Milchtank

## Patentansprüche

1. Heißgetränkeautomat zur Zubereitung eines Heißgetränkes, insbesondere Kaffee, Tee oder Kakao, mit einem Leitungssystem (1), das von Wasser (2) durchflossen ist,
a) wobei das Leitungssystem (1) eine Zubereitungsleitung (12) umfasst, die über wenigstens eine Zuleitung (11) mit dem Wasser (2) gespeist wird,
b) wobei in der Zubereitungsleitung (12) ein erster Durchflusssensor (41) zur Erfassung der Menge des in der Zubereitungsleitung (12) fließenden Wassers (2), sowie eine Zubereitungseinheit, insbesondere eine Brühkammer (5), für die Zubereitung des Heißgetränkes angeordnet sind, und
c) wobei der Heißgetränkeautomat wenigstens eine weitere Funktionseinheit (61 - 64) umfasst, die über die wenigstens eine Zuleitung (11) mit dem Wasser (2) gespeist wird, und
d) wobei der Heißgetränkeautomat zumindest einen zweiten Durchflusssensor (42) zur Erfassung der Menge des für die weitere Funktionseinheit (61 - 64) genutzten Wassers (2) umfasst,
**dadurch gekennzeichnet, dass**
e) der Heißgetränkeautomat mehrere der Funktionseinheiten (61 - 64) umfasst, die über die Zuleitung (11) mit dem Wasser (2) gespeist werden, und
f) die Funktionseinheiten (61 - 64) an eine gemeinsame Nebenleitung (13) angeschlossen sind, die über die Zuleitung (11) mit dem Wasser (2) gespeist wird, und in der der zweite Durchflusssensor (42) angeordnet ist.

2. Heißgetränkeautomaten nach Anspruch 1, **dadurch gekennzeichnet, dass** zumindest eine der über die Nebenleitung (13) mit dem Wasser (2) gespeisten Funktionseinheiten (61 - 64) aus der Gruppe
• Reinigungskreislauf (61) für die Reinigung der Zubereitungseinheit und/oder einer Getränkeleitung, und/oder für die Reinigung einer Getränkezusatz- Leitung,
• Dampferzeuger (64), oder
• Kaltwasserzufuhr (62)
• Milchsystem oder
• Dichtungssystem
ist.

3. Heißgetränkeautomaten nach einem der vorherigen Ansprüche, **dadurch gekennzeichnet, dass** die Funktionseinheiten (61 - 64) parallel zueinander angeordnet sind.

4. Heißgetränkeautomaten nach einem der vorherigen Ansprüche, **dadurch gekennzeichnet, dass** er eine Gerätesteuerung (9) aufweist, die dazu ausgelegt ist, die Funktionseinheiten (61 - 64) in Abhängigkeit von einem ersten mit dem ersten Durchflusssensor (41) erfassten Messwert (S1) und einem zweitem mit dem zweiten Durchflusssensor (42) erfassten Messwert (S2) zu steuern.

5. Heißgetränkeautomaten nach einem der vorherigen Ansprüche, **dadurch gekennzeichnet, dass** der erste Durchflusssensor (41) und/oder der zweite Durchflusssensor (42) als Flügelradsensor ausgebildet sind.

6. Verfahren zur Herstellung eines Heißgetränkes mit einem Heißgetränkeautomaten nach einem der vorherigen Ansprüche, bei dem Einschaltzeiten und/oder Ausschaltzeiten der Zubereitungseinheit (5) und/oder der Funktionseinheiten (61 - 64) des Heißgetränkeautomaten in Abhängigkeit von dem ersten, mit dem ersten Durchflusssensor (41) gemessenen Messwert (S1) und dem zweiten, mit dem zweiten Durchflusssensor (42) gemessenen Messwert (S2) gesteuert werden.

## Claims

1. Hot drinks machine for preparation of a hot beverage, particularly coffee, tea or cocoa, with a duct system (1) through which water (2) can flow,
a) wherein the duct system (1) comprises a preparation duct (12), which is supplied with the water (2) by way of at least one feed duct (11),
b) wherein a first throughflow sensor (41) for detecting the quantity of the water (2) flowing in the preparation duct (12) as well as a preparation unit, particularly a brewing chamber (5), for preparation of the hot beverage are arranged in the preparation duct (12),
c) wherein the hot drinks machine comprises at least one further functional unit (61 - 64), which is supplied with the water (2) by way of the at least one feed duct (11), and
d) wherein the hot drinks machine comprises at least one second throughflow sensor (42) for detecting the quantity of the water (2) used for the further functional unit (61 - 64),
**characterised in that**
e) the hot drinks machine comprises a plurality of the functional units (61 - 64), which are supplied with the water (2) by way of the feed duct (11), and
f) the functional units (61 - 64) are connected with a common bypass duct (13), which is supplied with the water (2) by way of the feed duct (11) and in which the second throughflow sensor (42) is arranged.

2. Hot drinks machine according to claim 1, **characterised in that** at least one of the functional units (61 - 64) supplied with the water (2) by way of the bypass duct (13) is from the group:
- cleaning circuit (61) for cleaning the preparation unit and/or a beverage duct and/or for cleaning a beverage additive duct,
- steam producer (64) or
- cold water feed (62)
- milk system or
- sealing system.

3. Hot drinks machine according to one of the preceding claims, **characterised in that** the functional units (61 - 64) are arranged parallel to one another.

4. Hot drinks machine according to any one of the preceding claims, **characterised in that** it comprises an apparatus control (9) designed for the purpose of controlling the functional units (61 - 64) in dependence on a first measurement value (S1) detected by the first throughflow sensor (41) and a second measurement value (S2) detected by the second throughflow sensor (42).

5. Hot drinks machine according to any one of the preceding claims, **characterised in that** the first throughflow sensor (41) and/or the second throughflow sensor (42) are constructed as an impeller sensor.

6. Method of producing a hot beverage by a hot drinks machine according to any one of the preceding claims, in which the switch-on times and/or switch-off times of the preparation unit (5) and/or the functional units (61 - 64) of the hot drinks machine are controlled in dependence on the first measurement value (S1) measured by the first throughflow sensor (41) and the second measurement value (S2) measured by the second throughflow sensor (42).

## Revendications

1. Machine automatique de préparation de boissons chaudes en particulier de café, de thé ou de chocolat équipée système de conduites (1), dans lequel circule de l'eau (2), machine dans laquelle :
a) le système de conduites (1) comporte une conduite de préparation (12) qui est alimentée en eau (2) par au moins une conduite d'entrée (11),
b) dans la conduite de préparation (12) sont montés un premier capteur de débit (41) permettant de détecter la quantité d'eau (2) circulant dans la conduite de préparation (12) ainsi qu'une unité de préparation, en particulier une chambre de macération (5) permettant la préparation de la boisson chaude, et
c) la machine automatique de préparation de boissons chaudes comporte au moins une autre unité fonctionnelle (61 - 64) qui est alimentée en eau (2) par l'intermédiaire de la conduite d'entrée (11), et
d) la machine automatique de préparation de boissons chaudes comporte au moins un second capteur de débit (42) permettant de détecter la quantité d'eau (2) utilisée par l'autre unité fonctionnelle (61 - 64),
**caractérisée en ce que**
e) la machine de préparation de boissons chaudes, comporte plusieurs unités fonctionnelles (61 - 64) qui sont alimentées en eau (2) par l'intermédiaire de la conduite d'entrée (11), et
f) les unités fonctionnelles (61 - 64) sont connectées à une conduite auxiliaire commune (13) qui est alimentée en eau (2) par la conduite d'entrée (11) et dans laquelle est monté le second capteur de débit (42).

2. Machine automatique de préparation de boissons chaudes, conforme à la revendication 1,
**caractérisée en ce qu'**
au moins l'une des unités fonctionnelles (61, 64) alimentées en eau (2) par l'intermédiaire de la conduite auxiliaire (13) est une unité du groupe des unités suivantes :
• un circuit de nettoyage (61) permettant le nettoyage de l'unité de préparation et/ou d'une conduite de transfert de la boisson et/ou le nettoyage d'une conduite d'addition de boissons,
• un élément producteur de vapeur (64), ou
• une alimentation d'eau froide (62),
• un système de lait, ou
• un système d'étanchéité.

3. Machine automatique de préparation de boissons chaudes, conforme à l'une des revendications précédentes,
**caractérisée en ce que**
les unités fonctionnelles (61, 64) sont montées parallèlement les une au autres.

4. Machine automatique de préparation de boissons chaudes, conforme à l'une des revendications précédentes,
**caractérisée en ce qu'**
elle comporte une commande d'appareil (9) qui est réalisée de façon à permettre de commander les unités fonctionnelles (61 - 64) en fonction d'une première valeur de mesure (S1) détectée par le premier capteur de débit (41) et d'une seconde valeur de mesure (S2) détectée avec le second capteur de débit (42).

5. Machine automatique de préparation de boissons chaudes, conforme à l'une des revendications précédentes, **caractérisée en ce que** le premier capteur de débit (41) et/ou le second capteur de débit (42) est(sont) réalisé(s) sous la forme de capteur(s) à ailettes.

6. Procédé de préparation de boissons chaudes avec une machine automatique conforme à l'une des revendications précédentes selon lequel les temps de branchement et/ou de coupure de l'unité de préparation (5) et/ou des unités fonctionnelles (61 - 64) de la machine automatique de préparation de boissons chaudes sont commandées en fonction de la première valeur de mesure (S1) mesurée avec le premier capteur de débit (41) et de la seconde valeur de mesure (S2) mesurée avec le second capteur de débit (42).
